# EUROPÄISCHE PATENTANMELDUNG

(11) **EP 1 035 532 A1**
(43) Veröffentlichungstag der Anmeldung: **13.09.2000**
(21) Anmeldenummer: 00104103.7
(22) Anmeldetag: 28.02.2000
(51) Int. Cl.: G08G 1/133, G09F 21/04, G09B 29/10

(54) **Vorrichtung zur Anzeige von Informationsdaten**

(30) Priorität: 10.03.1999 DE 19910612
(71) Anmelder: SIEMENS AKTIENGESELLSCHAFT, 80333 München (DE)
(72) Erfinder: Brand, Manfred, Dipl.-Ing., 91056 Erlangen (DE); Döberl, Armin, Dipl.-Ing., 90453 Nürnberg (DE)

(57) **Zusammenfassung**

Die Erfindung betrifft eine Vorrichtung zur Anzeige von Informationsdaten in einem oder über ein Fahrzeug, insbesondere einem Zug. Die Anzeigeeinheit weist verschiedene Anzeigebereiche auf, in denen verschiedenartige Informationsdaten angezeigt werden. Mittels einer Rechnereinheit wird eine ereignisgesteuerte Umschaltung des Anzeigeinhalts vorgenommen. Dies ermöglicht eine flexible und aktualisierte Informationsübermittlung.

## Beschreibung

Die Erfindung betrifft eine Vorrichtung zur Anziege von Informationsdaten.

In den ICE-Zügen der deutschen Bundesbahn sind bereits Anzeigeeinheiten vorgesehen, über welche sich die Fahrgäste bestimmte Informationsdaten anzeigen lassen können. Zu diesem Zweck ist den Anzeigeeinheiten oftmals eine Zifferntastatur zugeordnet. Bei Betätigung einer vorgegebenen Zifferntaste erfolgt eine Umschaltung der Anzeigeeinheit in dem Sinne, daß Informationen zu dem der betätigten Zifferntaste zugeordneten Thema angezeigt werden. Diese Informationen sind in einer statischen Datenquelle, beispielsweise einer CD-ROM, abgespeichert.

Ausgehend von diesem Stand der Technik liegt der Erfindung die Aufgabe zugrunde, eine neue Vorrichtung zur Anzeige von Informationsdaten anzugeben, bei der die Informationsübermittlung an die Kunden verbessert ist.

Diese Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, daß die Anzeige im Sinne einer Mehrfachnutzung zur gleichzeitigen Anzeige von verschiedenartigen Informationen genutzt werden kann. Vorzugsweise handelt es sich dabei um dynamische Fahrplandaten und allgemeine Informationsdaten. Beispielsweise können Zugverspätungen automatisch erfaßt und gemeldet werden. Ferner können Hinweise auf Anschlußzüge angezeigt werden, in die im nächsten Bahnhof umgestiegen werden kann. Bei einer geeigneten Ausbildung der Hardware können auch Videoclips abgespielt werden. Mittels der beanspruchten Anzeige ist folglich sowohl in Zügen als auch in Bahnhöfen eine Anzeige von ereignisgesteuerten, aktualisierten Fahrgastinformationen möglich.

Weitere vorteilhafte Eigenschaften der Erfindung ergeben sich aus der Erläuterung von Ausführungsbeispielen anhand der Figuren.

Es zeigt:
- FIG 1: ein Blockschaltbild zur Erläuterung der grundsätzlichen Funktionsweise der Erfindung,
- FIG 2: ein erstes Beispiel für eine Bildschirmanzeige,
- FIG 3: ein zweites Beispiel für eine Bildschirmanzeige und
- FIG 4: ein drittes Beispiel für eine Bildschirmanzeige.

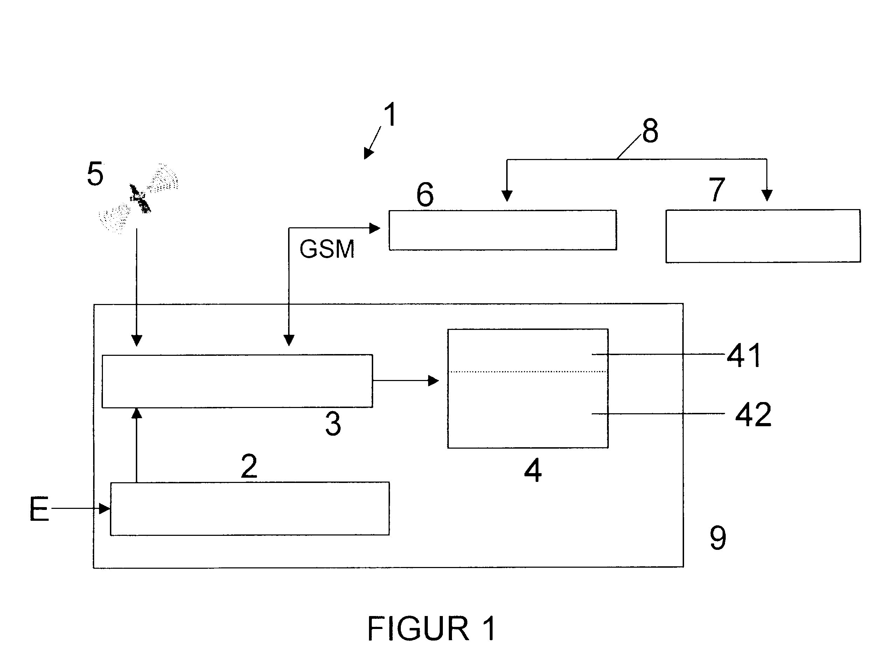

Die Figur 1 zeigt ein Blockschaltbild zur Erläuterung der grundsätzlichen Funktionsweise der Erfindung. Die dargestellte Vorrichtung weist eine erste Eingabeeinheit 1 auf, die zu einer Eingabe von ereignisgesteuerten Informationsdaten vorgesehen ist. Diese werden über eine bidirektionale Funkübertragungsstrecke GSM an eine erste Rechnereinheit 3 übertragen, bei welcher es sich um den Bordrechner eines Zuges 9 oder anderen Fahrzeugs handelt. Die erste Rechnereinheit 3 empfängt weiterhin allgemeine Informationsdaten, die von einer zweiten Eingabeeinheit 2 zur Verfügung gestellt werden.

Ausgangsseitig ist die erste Rechnereinheit 3 mit einer Anzeigeeinheit 4 verbunden, auf der die Informationsdaten dargestellt werden. Diese Anzeigeeinheit 4 weist zwei verschiedene Anzeigebereiche 41 und 42 auf, die zur Anzeige verschiedenartiger Informationsdaten vorgesehen sind.

Die erste Eingabeeinheit 1 weist eine zweite Rechnereinheit 6 auf, bei der es sich um eine stationäre Datenzentrale handelt. Diese ist über das Festnetz 8 mit einem Datenserver 7 verbunden, der vorzugsweise von der Bundesbahn bereitgestellt wird und Fahrplaninformationen über den gesamten Zugverkehr in der Bundesrepublik Deutschland liefert.

Weiterhin gehört der ersten Eingabeeinheit 1 auch eine Einheit 5 zur Positionsermittlung an. Bei dieser handelt es sich um eine GPS-Einheit, bei welcher von mehreren Satelliten ausgestrahlte Referenzsignale zur Ermittlung der momentanen Position des Fahrzeugs 9 ausgewertet werden.

Die erste Rechnereinheit 3 steuert eine ereignisgesteuerte Umschaltung der Anzeige 4. Beispielsweise werden in einer ersten Anzeigebetriebsart im ersten Anzeigebereich 41 dynamische Fahrplandaten angezeigt. Zu diesem Zweck erfolgt zunächst mittels des GPS-Systems 5 eine Ermittlung der momentanen Position des Zuges. Ist diese erkannt, dann sendet die erste Rechnereinheit 3 über die Funkübertragungsstrecke GSM ein Anfragesignal an die stationäre zweite Rechnereinheit 6 aus. Diese erfragt aus dem Datenserver 7 Fahrplandaten, die der ermittelten Momentanposition des Zuges zugehörig sind. Die Fahrplandaten geben beispielsweise den Namen des vorherigen Bahnhofs und die Abfahrtszeit des Zuges aus diesem Bahnhof sowie den Namen des nächsten Bahnhofs und die planmäßige Ankunftszeit des Zuges am nächsten Bahnhof an. Die Anzeige dieser Daten erfolgt im ersten Anzeigenbereich 41 der Anzeigeeinheit 4.

Im zweiten Anzeigebereich 42 der Anzeigeeinheit 4 werden, solange der Zug beispielsweise weiter als 5 Kilometer vom nächsten Bahnhof entfernt ist, allgemeine Informationsdaten angezeigt, die von der zweiten Eingabeeinheit 2 zur Verfügung gestellt werden. Bei diesen allgemeinen Informationsdaten kann es sich beispielsweise um Daten handeln, die dem Speisenangebot des Bordrestaurants des Zuges entsprechen.

Unterschreitet die Entfernung des Zuges vom nächsten Bahnhof die Entfernung von 5 Kilometern, dann wird dies von der ersten Rechnereinheit 3 durch Auswertung der GPS-Signale erkannt. Als Reaktion auf diese Entfernungsunterschreitung steuert die erste Rechnereinheit 3 eine ereignisgesteuerte Umschaltung der Anzeige auf der Anzeigeeinheit 4. Diese Umschaltung der Anzeige besteht darin, daß im zweiten Anzeigebereich 42 nicht mehr allgemeine Informationsdaten, sondern die Abfahrtszeiten von Anschlußzügen angezeigt werden, in die die Fahrgäste am nächsten Bahnhof umsteigen können. Der Anzeigeinhalt des ersten Anzeigebereiches 41 bleibt bei dieser Umschaltung der Anzeige unverändert.

Eine Alternative zur oben angegebenen Anzeige des Speisenangebotes im Bordrestaurant ist eine Anzeige von Werbung im Anzeigeblock 42. Beispielsweise können Hinweise auf Taxibetriebe am Zielbahnhof, Hinweise auf Hotels in der Nähe des Zielbahnhofs, Veranstaltungshinweise im Zielort, Hinweise auf im Zielort ansässige Firmen oder andere allgemeine Informationen über den Zielort angezeigt werden.

Eine andere Alternative zum oben beschriebenen Ausführungsbeispiel besteht darin, daß landesweite Fahrplandaten nur einmalig, beispielsweise nach halbjährlich erfolgendem Fahrplanwechsel, von der zweiten Rechnereinheit 6 in die erste Rechnereinheit 3 übertragen und dann dort in einem Speicher abgespeichert werden. Bei dieser Alternative werden im Betrieb von der zweiten Rechnereinheit 6 zur ersten Rechnereinheit 3 nur noch Änderungsdaten übertragen, beispielsweise Verspätungsmeldungen, Gleisänderungen und Änderungen von Anschlußzügen. Diese Alternative ist preisgünstiger realisierbar als die oben beschriebene Lösung.

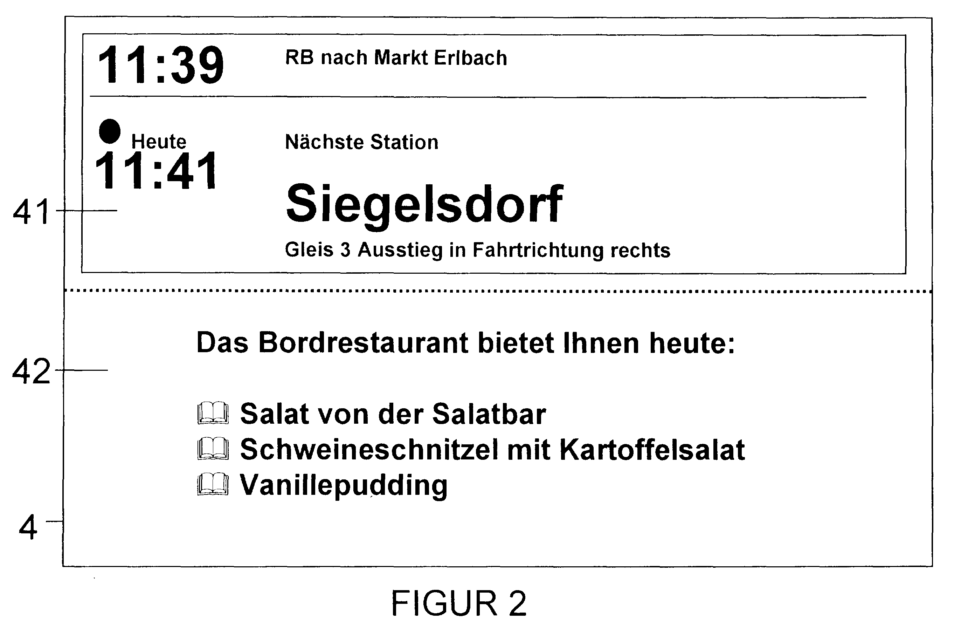

Beispiele für Anzeigen sind in den Figuren 2-4 gezeigt.

In der Figur 2 wird im ersten Anzeigebereich 41 der Anzeige die momentane Uhrzeit 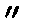 11:39", der Zugtyp Regionalbahn 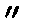 RB", die Endstation 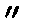 Markt Erlbach", der Name der heute nächsten Station 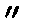 Siegelsdorf" und die dortige Ankunftszeit 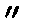 11:41" angezeigt. Der zweite Anzeigebereich 42 wird zur Anzeige des Tagesmenüs im Bordrestaurant verwendet.

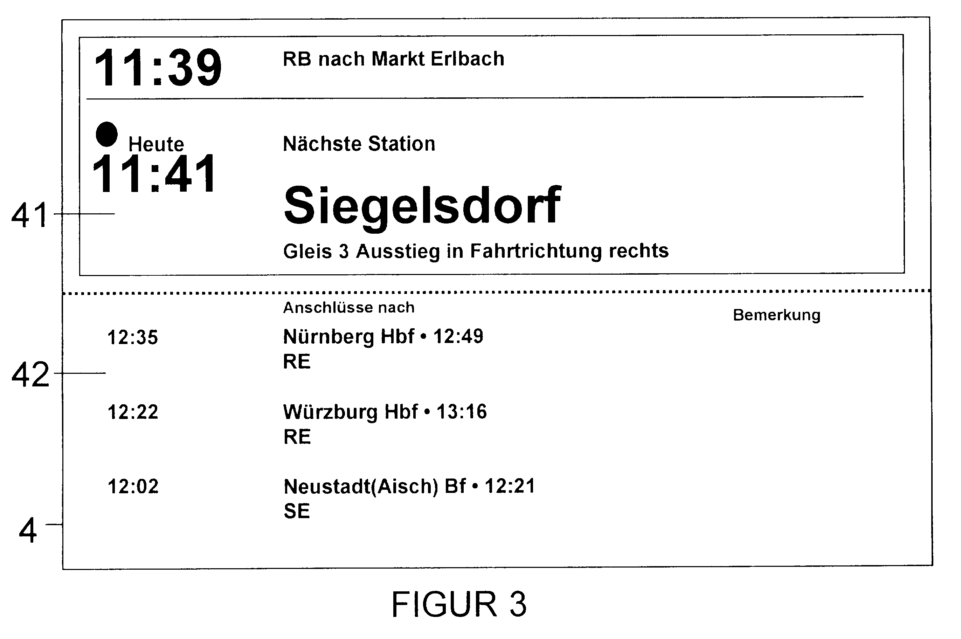

In der Figur 3 stimmt der Anzeigeinhalt des Anzeigebereichs 41 mit dem Anzeigeinhalt des Anzeigebereiches 41 von Figur 2 überein. Im Anzeigebereich 42 werden Informationen über von der nächsten Station 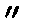 Siegelsdorf" ausgehende Anschlußverbindungen dargestellt.

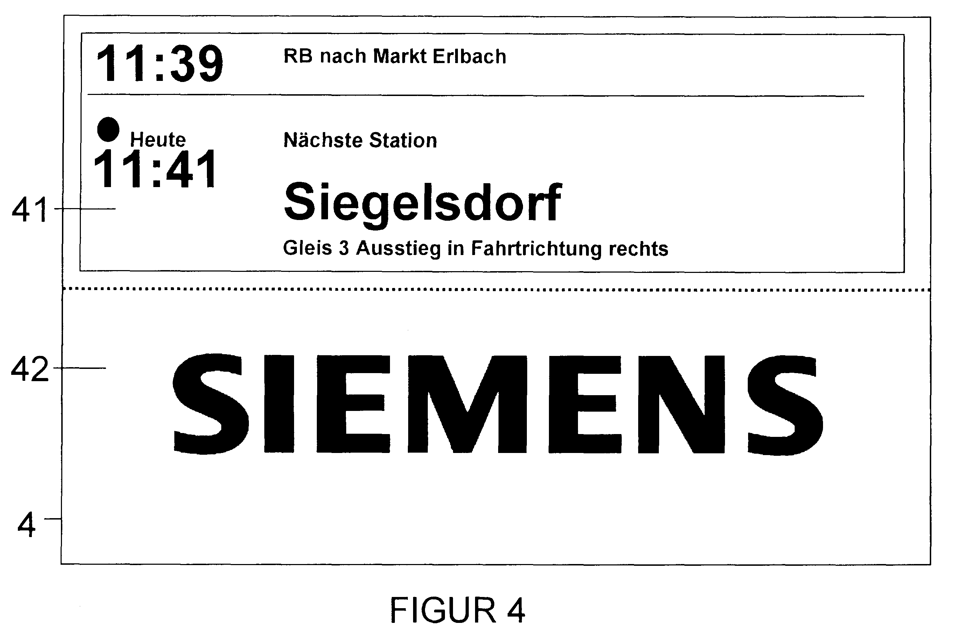

Auch in der Figur 4 stimmt der Anzeigeinhalt des Anzeigebereiches 41 mit dem Anzeigeinhalt des Anzeigebereiches 41 von Figur 2 überein. Der Anzeigebereich 42 in Figur 4 dient zur Anzeige von Werbung.

Die zweite Eingabeeinheit 2 weist, wie aus der Figur 1 hervorgeht, einen separaten Eingang E auf, bei welchem es sich um einen eigenen Datenfunkeingang handelt. Über diesen Eingang kann in vorteilhafter Weise eine Online-Datenaktualisierung vorgenommen werden. Alternativ dazu können die allgemeinen Informationsdaten auch über eine CD-ROM und ein zugehöriges Laufwerk zur Verfügung gestellt werden.

Nach alledem kann die Vorrichtung gemäß der Erfindung zur Anzeige regulärer Fahrdaten wie Soll- und Istfahrplandaten, zur Anzeige dynamischer Fahrdaten wie Verspätungsanzeigen, Anschlußverbindungen, Uhrzeit, nächster Halt oder Änderungsmeldungen oder zur Anzeige von nicht ereignisgesteuerten allgemeinen Informationsdaten wie Werbung und Hinweisen allgemeiner Art verwendet werden. Dabei erfolgt stets eine gleichzeitige Anzeige verschiedenartiger Informationen in verschiedenen Anzeigebereichen der Anzeigeeinheit.

Vorzugsweise werden in einer Normalbetriebsart im ersten Anzeigebereich nur Basisinformationen dargestellt, beispielsweise reguläre Fahrdaten, und im zweiten Anzeigebereich allgemeine Informationsdaten. Beim Auftreten eines bestimmten Ereignisses, beispielsweise der Annäherung an den nächsten Bahnhof, erfolgt eine Umschaltung der im zweiten Anzeigebereich dargestellten Informationen, indem dort beispielsweise detaillierte Informationen dazugeschaltet werden, insbesondere dynamische Fahrdaten.

Gemäß einer vorteilhaften Weiterbildung der Erfindung kann die erste Rechnereinheit die ereignisgesteuerte Umschaltung auch gleichzeitig dazu verwenden, eine Veränderung der Größe der einzelnen Anzeigebereiche durchzuführen.

## Patentansprüche

1. Vorrichtung zur Anzeige von Informationsdaten in einem oder über ein Fahrzeug, mit
einer ersten Eingabeeinheit (1) zur Eingabe von ereignisgesteuerten Informationsdaten,
einer zweiten Eingabeeinheit (2) zur Eingabe von allgemeinen Informationsdaten,
einer Umschalteinheit (3), die eingangsseitig mit den Eingabeeinheiten verbunden ist,
einer ersten Rechnereinheit (3), und
einer Anzeigeeinheit (4), auf welcher unter Steuerung durch die erste Rechnereinheit (3) eine gleichzeitige Anzeige verschiedenartiger Informationsdaten in verschiedenen Anzeigebereichen (4a, 4b) erfolgt.

2. Vorrichtung nach Anspruch 1, **dadurch gekennzeichnet,** daß die erste Rechnereinheit (3) eine ereignisgesteuerte Umschaltung der Anzeige steuert.

3. Vorrichtung nach Anspruch 1 oder 2, **dadurch gekennzeichnet,** daß die erste Rechnereinheit (3) zu einer Veränderung der Größe der Anzeigebereiche (4a,4b) dient.

4. Vorrichtung nach einem der vorhergehenden Ansprüche, **dadurch gekennzeichnet,** daß die erste Eingabeeinheit (1) eine Einheit zur Positionsermittlung umfaßt.

5. Vorrichtung nach Anspruch 4, **dadurch gekennzeichnet,** daß die Einheit zur Positionsermittlung eine GPS-Einheit (5) ist.

6. Vorrichtung nach Anspruch 4 oder 5, **dadurch gekennzeichnet,** daß die erste Rechnereinheit (3) eine ereignisgesteuerte Umschaltung der Anzeige dann auslöst, wenn die ermittelte Fahrzeugposition eine vorgegebene Entfernung von einem Zielort des Fahrzeugs unterschreitet.

7. Vorrichtung nach einem der vorhergehenden Ansprüche, **dadurch gekennzeichnet,** daß die erste Eingabeeinheit (1) eine zweite Rechnereinheit (6) umfaßt, die mit der ersten Rechnereinheit (3) über eine Funkübertragungsstrecke (GSM) verbunden ist.

8. Vorrichtung nach Anspruch 7, **dadurch gekennzeichnet,** daß die zweite Rechnereinheit (6) mit einem Datenserver (7) verbunden ist.

9. Vorrichtung nach Anspruch 8, **dadurch gekennzeichnet,** daß die zweite Rechnereinheit (6) mit dem Datenserver (7) über das Festnetz (8) verbunden ist.

10. Vorrichtung nach einem der vorhergehenden Ansprüche, **dadurch gekennzeichnet,** daß die erste Rechnereinheit (3) der Bordrechner des Fahrzeugs (9) und die zweite Rechnereinheit (6) eine stationäre Rechnereinheit ist.

11. Vorrichtung nach einem der vorhergehenden Ansprüche, **dadurch gekennzeichnet,** daß die zweite Eingabeeinheit (2) einen separaten Datenfunkeingang aufweist.

12. Vorrichtung nach einem der vorhergehenden Ansprüche, **dadurch gekennzeichnet,** daß die erste Eingabeeinheit (1) zur Eingabe von statischen und dynamischen Fahrdaten vorgesehen ist.

13. Vorrichtung nach einem der vorhergehenden Ansprüche, **dadurch gekennzeichnet,** daß die zweite Eingabeeinheit (2) zur Eingabe von nicht ereignisgesteuerten Informationsdaten vorgesehen ist.

14. Vorrichtung nach einem der vorhergehenden Ansprüche, **dadurch gekennzeichnet,** daß das Fahrzeug ein Zug oder ein Bus ist.

15. Vorrichtung nach einem der vorhergehenden Ansprüche 7-14, **dadurch gekennzeichnet,** daß während des regulären Fahrbetriebes über die Funkübertragungsstrecke (GSM) lediglich eine Übertragung von Änderungsdaten vorgesehen ist.

16. Vorrichtung nach einem der vorhergehenden Ansprüche, **dadurch gekennzeichnet,** daß das Fahrzeug (9) einen Speicher für landesweite Fahrplandaten aufweist und eine Aktualisierung der landesweiten Fahrplandaten nur bei einer Fahrplanänderung vorgesehen ist.
